# EUROPEAN PATENT SPECIFICATION

(11) **EP 2 267 334 B1**
(45) Date of publication and mention of the grant of the patent: **23.05.2012**
(21) Application number: 10251003.9
(22) Date of filing: 28.05.2010
(51) Int. Cl.: F16H 37/04

(54) **Vehicle transmissions**
Fahrzeuggetriebe
Transmissions de véhicule

(30) Priority: 18.06.2009 GB 0909582
(43) Date of publication of application: 29.12.2010
(73) Proprietor: Valtra Oy Ab, 44200 Suolahti (FI)
(72) Inventor: Ruokola, Timo, Jyvaskyla, 40520 (FI)
(74) Representative: Morrall, Roger

(56) References cited:
- WO-A1-2008/142525
- US-B1- 6 761 658

## Description

This invention relates to vehicle transmissions and in particular to transmissions for use in tractors or similar vehicles. A vehicle transmission in accordance with the preamble of claim 1 is known from WO 2008/142525 A, figure 4.

There is a requirement for a compact transmission which can provide several ratios and a reverse drive function.

Thus according to the present invention there is provided a vehicle transmission having:-

an input shaft, an output shaft, an epicyclic having three compound planets which co-rotate in unison at all times on a planet carrier, two planets acting as inputs or outputs to the epicyclic and being connected with respective sun gears connected with the input shaft or output shaft and the third planet acting as the output or input and engaging a respective sun gear connected with the output shaft or input shaft of the epicyclic, the connection between the second of the two planets and its respective sun including a reverse idler, first and second hydraulically operated clutches which are engageable to drive the first and second input planets via their respective sun from the input shaft or output shaft and a third hydraulically operated clutch for holding the carrier stationary when engaged, and control means to operate a) the first and second clutches simultaneously to provide a first forward ratio from the epicyclic, b) operate the first and third clutches simultaneously to provide a second forward ratio from the epicyclic, and c) operate the second and third clutches simultaneously to provide a reverse ratio from the epicyclic.

Such a transmission can be used as the input stage of a tractor transmission by driving one or more multi-ratio gearboxes from the output shaft of the epicyclic. In such an arrangement, the first and second forward ratios of the epicyclic can be used as two ranges of the tractor transmission.

A five speed version of the transmission of the present invention can also be provided if one of the input or output planets is of double width and is engage by a further sun gear which can be driven from the input shaft or drive the output shaft via a fourth hydraulically operated clutch, and a fifth hydraulically operated clutch is also provided to hold stationary the input our output sun which engages the reverse idler, the control means operating the five clutches in pairs to provide five forward ratios and one reverse ratio from the transmission.

Typical one additional multi-ratio gearbox will be a four speed synchromesh gearbox and this will be connected in series with a further gearbox which provides further ranges for the overall tractor transmission.

One embodiment of the present invention will now be described, by way of example only, with reference to the accompanying drawings in which:-
- Figure I: shows as diagrammatic representation of a tractor transmission in accordance with the present invention;
- Figure 2: shows part of Figure 1 on a larger scale;
- Figure 3: shows a table of the clutch engagement sequence used to engage the ratios of an epicyclic gear unit used in the transmission;
- Figure 4: shows a section through an actual epicyclic gear used in the transmission;
- Figure 5: shows a table of the typical number of teeth used in the epicyclic of Figure 2;
- Figure 6: shows diagrammatically a five speed version of the epicyclic;
- Figure 7: shows a table of the clutch engagement sequence used to engage the ratios of the five speed epicyclic unit shown in Figure 6;
- Figure 8: shows a table of the typical number of teeth used in the five speed epicyclic of Figure 6;
- Figure 9: shows diagrammatically a further form of five speed epicyclic;
- Figure 10: shows a table of the clutch engagement sequence used to engage the ratio of the five speed epicyclic unit shown in Figure 9, and
- Figure 11: shows a table of the typical number of teeth used in the five speed epicyclic of Figure 9.

Referring to the drawings, a tractor transmission 10 has an input shaft 11 which is driven from an engine 12. The input shaft 11 drives an epicyclic gear 13 whose output shaft 14 is fed into a four speed synchromesh gearbox 15 whose output shaft 16 drives a three speed range box 17 whose output shaft 18 is connected with a rear axle differential 19. Rear axle differential 19 drives rear wheels 20 via reduction hubs 21. Rear axle brakes 22 are also provided.

The output shaft 18 of three speed range box 17 also drives a front wheel drive shaft 23 via gears 78 and 79. Shaft 23 is connected with a front wheel differential 24 via a front axle drive clutch drive 25. Differential 24 drives front wheels 26 via reduction hubs 27.

A power take off drive shaft 28 is driven from input shaft 11 via shaft 29 and PTO drive clutch 30. A PTO speed selector mechanism 31 is provided so that the PTO shaft can be driven at 540 or 1000rpm depending on the position of the coupler 32.

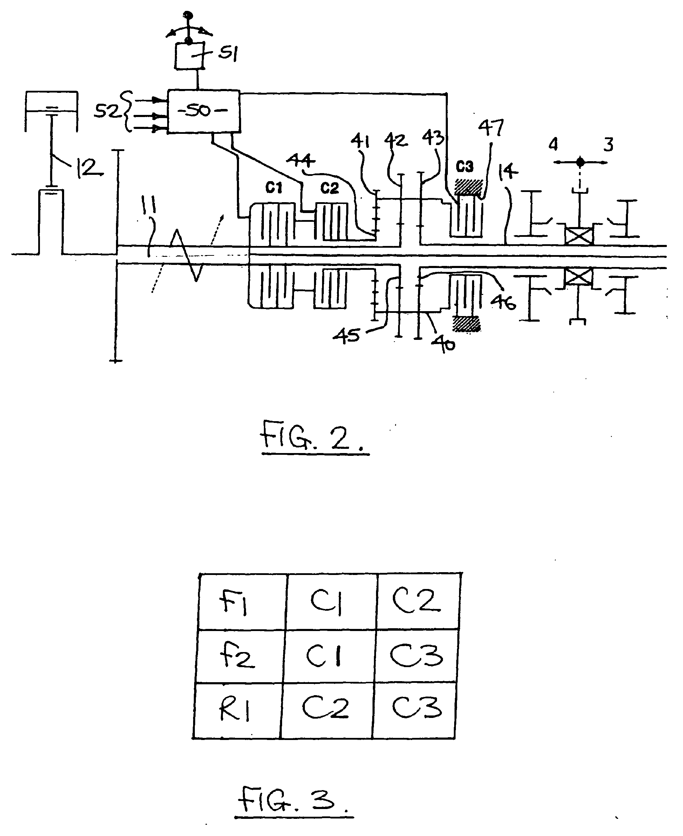

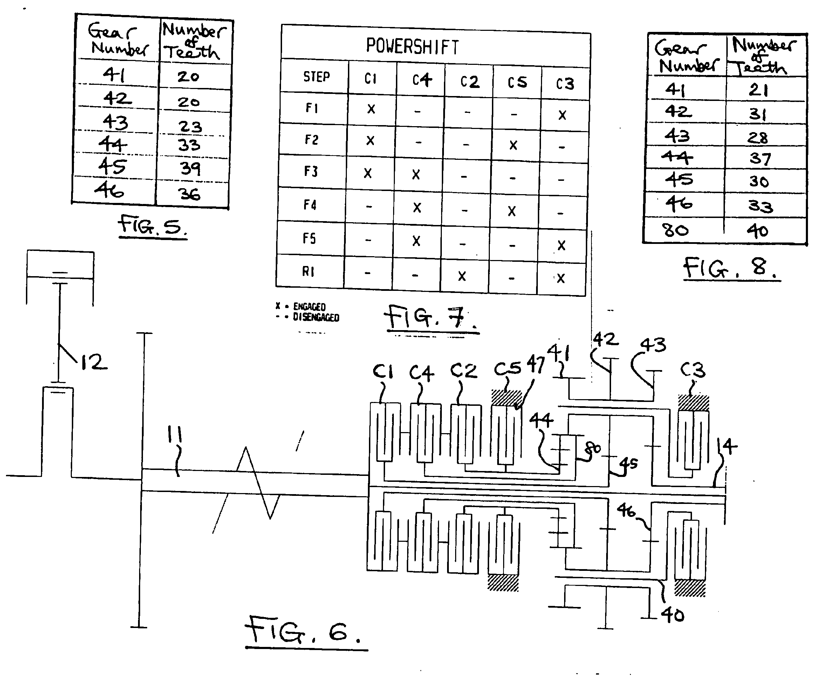

In accordance with the present invention the epicyclic gear 13, which is shown on a larger scale on Figure 2, has a planet carrier 40 on which are mounted sets of three compound planets 41,42 and 43. These sets of compound planets rotate in unison at all times. Planets 41 and 42 of each set mesh with sun gears 44 and 45 which are driven from the input shaft 11. First and second hydraulically operated multi-plate clutches C1 and C2 are provided, clutch C1 when engaged connects sun gear 45 with input shaft 11 and clutch C2 when engaged connects sun 44 with input shaft 11. The third planet 43 of each compound set engages a further sun gear 46 which is connected with the output shaft 14 of the epicyclic gear. In a typical arrangement, as shown in Figure 2, the planet and sun gears have the number of gear teeth shown in Figure 5.

A further hydraulically operated clutch/brake C3 is provided which when engaged locks the planet carrier 40 to the housing 47 of the epicyclic gear.

A hydraulic control system 50 is provided which is connected with clutches C1, C2 and C3 in order to engage the clutches when required thus changing the operative ratio in the epicylcic gearbox 13. This hydraulic control system 50 may in turn be controlled by a manually operated gear selector lever 51 or may be controlled automatically by vehicle operating parameter sensor inputs indicated diagrammatically at 52 in Figure 2.

The epicyclic gear 13 provides two forward ratios F1 and F2 and a reverse drive ratio R1. Figure 3 shows the clutch engagement sequence required to engage these three ratios in the epicyclic gear box. To engage first drive ratio F1 clutches C1 and C2 must be engaged simultaneously. To engage ratio F2 clutches C1 and C3 must be engaged simultaneously, and to engage the reverse drive ratio R1 clutches C2 and C3 are engaged simultaneously.

Thus the epicyclic gearbox provides a compact transmission element which can provide two forward and one reverse drive ratio with the forward ratios F1 and F2 constituting ranges in the overall drive transmission of the tractor.

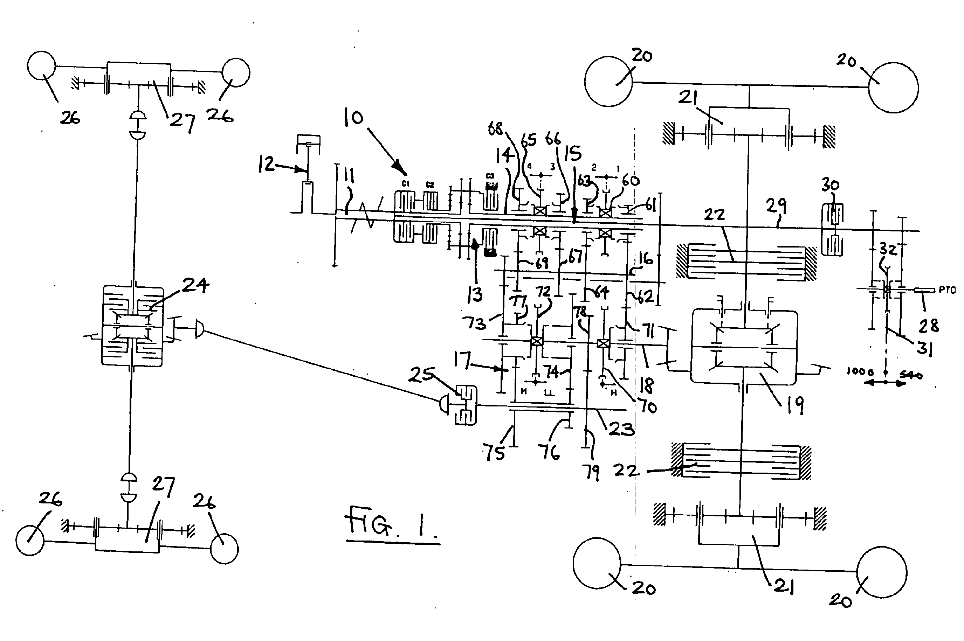

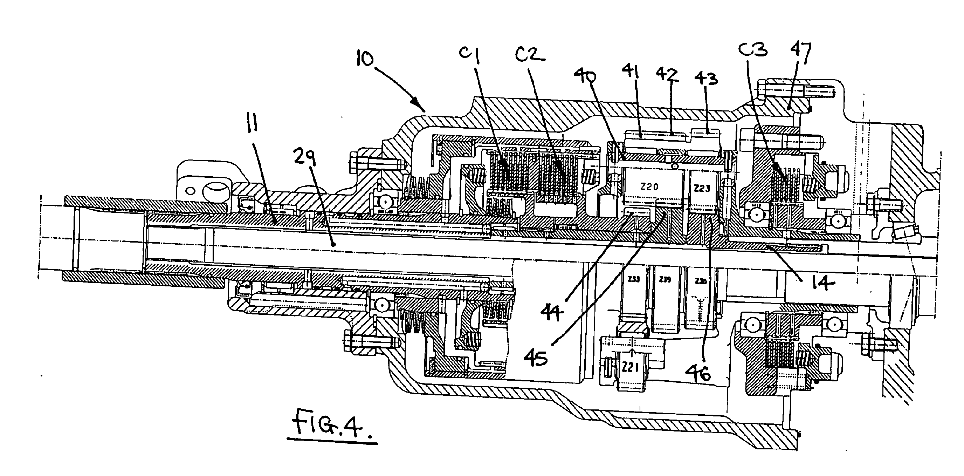

Figure 4 shows a radial section through an actual epicyclic gear 13 in which components similar to those indicated diagrammatically in Figures 1 and 2 have been similarly numbered.

As will be appreciated these ranges F1 and F2 are augmented by the four speeds which can be provided from the gearbox 15 and are still further augmented by the three additional ranges provided by the three speed range box 17

In the four speed synchromesh gearbox 15 ratios 1 and 2 are provided by selection coupler 60 which is moved to the right to engage the first ratio through gears 61 and 62 and to the left to engage the second ratio through gears 63 and 64. Similarly the third and fourth ratios of the gearbox 15 are selected by coupler 65 which is moved to the right to engage the third ratio through gears 66 and 67 and to the left to engage the fourth ratio through gears 68 and 69.

The three speed range gearbox 17 provides a high ratio using selector coupler 70 to couple71 with shaft 18. A medium range is provided by moving coupler 72 to the left to couple gear 73 with shaft 18. A low ratio is provided by moving coupler 72 to the right to couple gear 74 to shaft 18 and drive gear 74 via gears 73,77,75 & 76.

Figures 6 to 8 show diagrammatically details of a five speed transmission in which planets 41 are of double width and are engaged by a further sun gear 80 which can be connected with the input shaft 11 by a fourth hydraulically operated clutch C4 controlled by control system 50. A fifth hydraulically operated clutch C5 is also provided which can lock the sun 44 to the housing 47 of the epicyclic gear. In a typical arrangement, as shown in Figure 6, the planets and sun gears have the number of teeth shown in Figure 8.

With the gear arrangement shown in Figure 6 to 8 a first forward ratio F1 is obtained with clutches C1 and C3 engaged by the control system 50, a second forward ratio F2 is obtained with clutches C1 and C5 engaged, and a third forward ratio F3 is obtained clutches C1 and C4 engaged. A fourth forward ratio F4 is obtained with clutches C4 and C5 engaged and fifth forward ratio F5 is obtained with clutches C3 and C4 engaged. A reverse drive ratio R1 is obtained when clutches C2 and C3 are engaged.

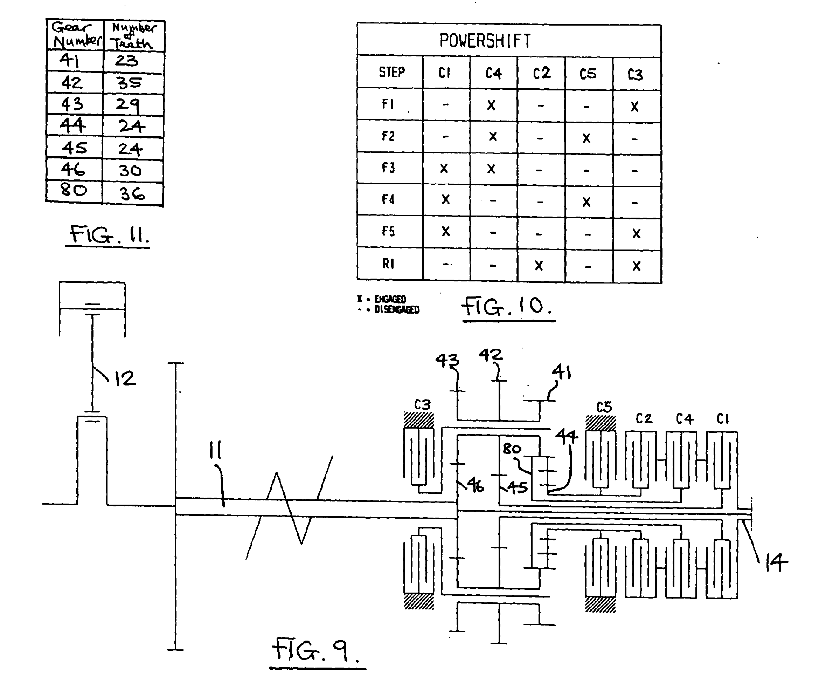

Figures 9 to 11 show diagrammatically details of a further form of five speed transmission which is effectively the reverse of the arrangement shown in Figures 6 to 8 as in the arrangement shown the Figures 9 to 11 the compound planets have one input 43 and two output planets 41 and 42.

The double width planets 41 engage further sun 80 which is connected with the output shaft 14 by a fourth clutch C4 and a fifth clutch C5 is provided for locking sun 44 to the housing 47 of the epicyclic gear. In a typical arrangement, as shown in Figure 9, the planets and sun gears have the number of teeth shown in Figure 11.

With the gear arrangement shown in Figures 9 to 11 a first forward ratio F2 is obtained with clutches C3 and C4 engage by the control system 50, a second forward ratio F2 is obtained with clutches C4 and C5 engaged, and a third forward ratio F3 is obtained clutches C1 and C4 engaged. A fourth forward ratio F4 is obtained with clutches C1 and C5 engaged and fifth forward ratio F5 is obtained with clutches C1 and C3 engaged. A reverse drive ratio R1 is obtained when clutches C2 and C3 are engaged.

Thus in all the above embodiments the over transmission can provide the necessary number of gears required for the efficient operation of the tractor and has a compact input stage provided by the epicyclic gear 13 which also provides to forward/reverse shuttle facility.

## Claims

1. A vehicle transmission (10) having:-
an input shaft (11);
an output shaft;
an epicyclic (13) having three compound planets (41,42,43) which co-rotate in unison at all times on a planet carrier (40), two planets (41,42) acting as inputs or outputs to the epicyclic and being connected with respective sun gears (44,45) connected with the input shaft or output shaft and the third planet (43) acting as the output or input and engaging a respective sun gear (46) connected with the output shaft or input shaft of the epicyclic,
first and second hydraulically operated clutches (C1,C2) which are engageable to drive the first and second input planets via their respective sun from the input shaft or output shaft and a third hydraulically operated clutch (C3) for holding the carrier (40) stationary when engaged, **characterized by**:
the connection between the second of the two planets and its respective sun including a reverse idler, and
control means (50) to operate a) the first and second clutches simultaneously to provide a first forward ratio from the epicyclic, b) operate the first and third clutches simultaneously to provide a second forward ratio from the epicyclic, and c) operate the second and third clutches simultaneously to provide a reverse ratio from the epicyclic.

2. A vehicle transmission according to Claim I in which one of the input or output planets is of double width and is engaged by a further sun gear (80) which can be driven from the input shaft or drive the output shaft via a fourth hydraulically operated clutch (C4), and a fifth hydraulically operated clutch (C5) is also provided to hold stationary the input or output sun which engages the reverse idler, the control means operating the five clutches in pairs to provide five forward ratios and one reverse ratio from the transmission.

3. A vehicle transmission according to Claim 2 having two planets acting as inputs and one planet acting as an output in which a first forward ratio F1 is provided by simultaneously engaging the first and third clutches, a second forward ratio F2 is provided by simultaneously engaging the first and fifth clutches, a third forward ratio F3 is provided by simultaneously engaging the first and fourth clutches, a fourth forward ratio F4 is provided by simultaneously engaging the fourth and fifth clutches, a fifth ratio F5 is provided by simultaneously engaging the third and fourth clutches, and a reverse ratio R1 is provided by simultaneously engaging the second and third clutches.

4. A vehicle transmission according to Claim 2 having one planet acting as an input and two planets acting as outputs in which a first forward ratio F1 is provided by simultaneously engaging the third and fourth clutches, a second forward ratio F2 is provided by simultaneously engaging the fourth and fifth clutches, a third forward ratio F3 is provided by simultaneously engaging the first and fourth clutches, a fourth forward ratio F4 is provided by simultaneously engaging the first and fifth clutches, a fifth ratio F5 is provided by simultaneously engaging the clutches, and a reverse ratio R1 is provided by simultaneously engaging the second and third clutches.

5. A vehicle transmission according to Claim I in which one or more multi ratio gearboxes are driven from the output shaft of the epicyclic.

## Patentansprüche

1. Fahrzeuggetriebe (10) mit:
einer Eingangswelle (11);
einer Ausgangswelle;
einem Planeten- oder Umlaufgetriebe (13) mit drei Verbund- oder Stufenplaneten (41, 42, 43), die ständig gemeinsam auf einem Planeten-Träger (40) rotieren, wobei zwei Planeten (41, 42) als Eingänge oder Ausgänge des Umlauf- oder Planetengetriebes dienen und mit zugeordneten Sonnenrädern (44, 45) verbunden sind oder werden, die mit der Eingangswelle oder Ausgangswelle verbunden sind, und der dritte Planet (43) als Eingang oder Ausgang dient und in ein zugeordnetes Sonnenrad (46) eingreift, welches mit der Ausgangswelle oder Eingangswelle des Umlauf- oder Planetengetriebes verbunden ist,
einer ersten und einer zweiten hydraulisch betätigten Kupplung (C1, C2), welche zum Antrieb des ersten und zweiten Eingangsplaneten von der Eingangswelle oder Ausgangswelle über ihre zugeordneten Sonnenräder betätigbar sind, und einer dritten hydraulisch betätigten Kupplung (C3) zum stationären Halten des Trägers (40) bei Betätigung,
**dadurch gekennzeichnet, dass**
die Verbindung zwischen dem zweiten der beiden Planeten und dessen zugeordnetem Sonnenrad ein Rücklauf- oder Rückwärtsgangrad aufweist und mindestens ein Steuerungs- oder Regelungs-Mittel (50) vorhanden ist zum
a) gleichzeitigen Betätigen der ersten und zweiten Kupplung zur Gewährleistung einer ersten Vorwärts-Übersetzung des Umlauf- oder Planetengetriebes,
b) gleichzeitigen Betätigen der ersten und dritten Kupplung zur Gewährleistung einer zweiten Vorwärts-Übersetzung des Umlauf- oder Planetengetriebes und
c) gleichzeitigen Betätigen der zweiten und dritten Kupplung zur Gewährleistung einer Rückwärts-Übersetzung des Umlauf- oder Planetengetriebes.

2. Fahrzeuggetriebe nach Anspruch 1, in dem einer der Eingangsplaneten oder Ausgangsplaneten eine doppelte Breite besitzt und in diesen ein weiteres Sonnenrad (80) eingreift, welches von der Eingangswelle angetrieben werden kann oder die Ausgangswelle antreiben kann über eine vierte hydraulisch betätigte Kupplung (C4), wobei auch eine fünfte hydraulisch betätigte Kupplung (C5) vorhanden ist zum stationären Halten der Eingangssonne oder Ausgangssonne, welche in das Rücklauf- oder Rückwärtsgangrad eingreift, wobei das Steuerungs- oder Regelungs-Mittel die fünf Kupplungen in Paaren betätigt zur Gewährleistung von fünf Vorwärts-Übersetzungen und einer Rückwärts-Übersetzung des Getriebes.

3. Fahrzeuggetriebe nach Anspruch 2 mit zwei Planeten, die als Eingänge dienen, und einem Planeten, der als Ausgang wirkt, wobei durch gleichzeitiges Betätigen der ersten und dritten Kupplung eine erste Vorwärts-Übersetzung F1 gewährleistet ist, durch gleichzeitiges Betätigen der ersten und fünften Kupplung eine zweite Vorwärts-Übersetzung F2 gewährleistet ist, durch gleichzeitiges Betätigen der ersten und vierten Kupplung eine dritte Vorwärts-Übersetzung F3 gewährleistet ist, durch gleichzeitiges Betätigen der vierten und fünften Kupplung eine vierte Vorwärts-Übersetzung F4 gewährleistet ist, durch gleichzeitiges Betätigen der dritten und fünften Kupplung eine fünfte Übersetzung F5 gewährleistet ist und durch gleichzeitiges Betätigung der zweiten und dritten Kupplung eine Rückwärts-Übersetzung R1 gewährleistet ist.

4. Fahrzeuggetriebe nach Anspruch 2 mit einem Planeten, der als Eingang wirkt, und zwei Planeten, die als Ausgang wirken, in dem eine erste Vorwärts-Übersetzung F1 gewährleistet ist durch gleichzeitiges Betätigen der dritten und vierten Kupplung, eine zweite Vorwärts-Übersetzung F2 gewährleistet ist durch gleichzeitiges Betätigen der vierten und fünften Kupplung, eine dritte Vorwärts-Übersetzung F3 gewährleistet ist durch gleichzeitiges Betätigen der ersten und vierten Kupplung, eine vierten Vorwärts-Übersetzung F4 gewährleistet ist durch gleichzeitiges Betätigen der ersten und fünften Kupplung, eine fünften Übersetzung F5 gewährleistet ist durch gleichzeitiges Betätigen der Kupplungen und eine Rückwärts-Übersetzung R1 gewährleistet ist durch gleichzeitiges Betätigen der zweiten und dritten Kupplung.

5. Fahrzeuggetriebe nach Anspruch 1, wobei von der Ausgangswelle des Planeten- oder Umlaufgetriebes ein Getriebe oder mehrere Getriebe mit mehreren Übersetzungen angetrieben wird/werden.

## Revendications

1. Transmission de véhicule (10) comportant :
un arbre d'entrée (11) ;
un arbre de sortie ;
un train épicycloïdal (13) comportant trois pignons satellites composés (41, 42, 43) qui, à tout instant, tournent simultanément à l'unisson sur un porte-pignon satellite (40), deux pignons satellites (41, 42) fonctionnant en tant qu'entrées ou sorties du train épicycloïdal et étant couplés à des roues solaires respectives (44, 45) couplées à l'arbre d'entré ou l'arbre de sortie et le troisième pignon satellite (43) fonctionnant en tant que sortie ou entrée et engrenant sur une roue solaire respective (46) couplée à l'arbre de sortie ou à l'arbre d'entrée du train épicycloïdal,
des premier et deuxième embrayages à commande hydraulique (C1, C2) qui peuvent être activés afin d'entraîner les premier et deuxième pignons satellites d'entrée par l'intermédiaire de leur roue solaire respective à partir de l'arbre d'entrée ou de l'arbre de sortie et un troisième embrayage à commande hydraulique (C3) destiné à maintenir le porte-pignon (40) stationnaire lorsqu'il est activé, **caractérisée par** :
la liaison entre le deuxième des deux pignons satellites et sa roue solaire respective qui comporte un pignon d'inversion, et
un moyen de commande (50) destiné à activer a) les premier et deuxième embrayages de manière simultanée afin d'assurer un premier rapport avant à partir du train épicycloïdal, b) activer les premier et troisième embrayages de manière simultanée afin d'assurer un deuxième rapport avant à partir du train épicycloïdal, et c) activer les deuxième et troisième embrayages de manière simultanée afin d'assurer une marche arrière à partir du train épicycloïdal.

2. Transmission de véhicule selon la revendication 1, dans laquelle l'un des pignons satellites d'entrée ou de sortie présente une largeur double et est couplé à une autre roue solaire (80) qui peut être entraînée par l'arbre d'entrée ou entraîner l'arbre de sortie par l'intermédiaire d'un quatrième embrayage à commande hydraulique (C4), et un cinquième embrayage à commande hydraulique (C5) est aussi agencé afin de maintenir stationnaire la roue solaire d'entrée ou de sortie qui est couplée au pignon d'inversion, le moyen de commande activant les cinq embrayages par paires afin d'assurer cinq rapports avant et une marche arrière à partir de la transmission.

3. Transmission de véhicule selon la revendication 2, comportant deux pignons satellites fonctionnant en tant qu'entrées et un pignon satellite fonctionnant en tant que sortie dans laquelle un premier rapport avant F1 est assuré en activant simultanément les premier et troisième embrayages, un deuxième rapport avant F2 est assuré en activant simultanément les premier et cinquième embrayages, un troisième rapport avant F3 est assuré en activant simultanément les premier et quatrième embrayages, un quatrième rapport avant F4 est assuré en activant simultanément les quatrième et le cinquième embrayages, un cinquième rapport F5 est assuré en activant simultanément les troisième et quatrième embrayages, et une marche arrière R1 est assurée en activant simultanément les deuxièmes et troisième embrayages.

4. Transmission de véhicule selon la revendication 2, comportant un pignon satellite fonctionnant en tant qu'entrée et deux pignons satellites fonctionnant en tant que sorties, dans laquelle un premier rapport avant F1 est assuré en activant simultanément les troisième et quatrième embrayages, un deuxième rapport avant F2 est assuré en activant simultanément les quatrième et cinquième embrayages, un troisième rapport avant F3 est assuré en activant simultanément les premier et quatrième embrayages, un quatrième rapport avant F4 est assuré en activant simultanément les premier et cinquième embrayages, un cinquième rapport F5 est assuré en activant simultanément les ... embrayages, et une marche arrière R1 est assurée en activant simultanément les deuxième et troisième embrayages.

5. Transmission de véhicule selon la revendication 1, dans laquelle une ou plusieurs boîtes de vitesse à rapport multiples sont entraînées par l'arbre de sortie du train épicycloïdal.
